# EUROPÄISCHE PATENTSCHRIFT

(11) **EP 1 037 042 B1**
(45) Veröffentlichungstag und Bekanntmachung des Hinweises auf die Patenterteilung: **30.07.2008**
(21) Anmeldenummer: 00102004.9
(22) Anmeldetag: 02.02.2000
(51) Int. Cl.: G01N 27/416

(54) **Eintauchsensor, Messanordnung und Messverfahren zur Uberwachung von Aluminium-Elektrolysezellen**
Submergable sensor, mesuring device and methode for monitoring a aluminium electrolytic cell
Capteur submersible appareil et méthode de mesure pour une cellule d'electrolyse d'aluminium

(30) Priorität: 05.03.1999 DE 19909614
(43) Veröffentlichungstag der Anmeldung: 20.09.2000
(73) Patentinhaber: Heraeus Electro-Nite International N.V., 3530 Houthalen (BE)
(72) Erfinder: Verstreken, Paul, 3200 Aarschot (BE)
(74) Vertreter: Kühn, Hans-Christian

(56) Entgegenhaltungen:
- DE-A- 2 501 570
- GB-A- 1 594 223
- US-A- 4 342 633
- US-A- 4 639 304

## Beschreibung

Die Erfindung betrifft einen Eintauchsensor zur Überwachung von Aluminium-Elektrolysezellen mit einer Badelektrode. Die Erfindung betrifft weiterhin eine Meßanordnung zur Überwachung von Elektrolysezellen mit einem Behälter sowie ein Meßverfahren unter Verwendung der Meßanordnung. Eine gattungsgemäße Vorrichtung ist z.B. aus US 4 639 304 bekannt.

Bei der Aluminiumherstellung in Aluminium-Elektrolysezellen wird die Funktionsfähigkeit derartiger Anlagen, insbesondere der Elektrolysebehälter überwacht. Diese Behälter bestehen im wesentlichen aus Kohlenstoff. Es ist wichtig zu sichern, daß diese Kohlenstoffbehälter keine Undichtigkeiten aufweisen, also beispielsweise im Verlauf ihres Betriebes keine Löcher bekommen, durch die das geschmolzene Aluminium auslaufen könnte. Zum Zwecke dieser Prüfung wird ein geeigneter Metallstab durch die auf der Aluminiumschmelze aufliegende Kryolithschicht hindurch in das Aluminium gestoßen. Der Metallstab ist über Verbindungsleitungen und einen Spannungsmesser mit in dem Behälterboden angeordneten Gegenelektroden verbunden, so daß die zwischen dem Metallstab (beziehungsweise der Aluminiumschmelze) und der Gegenelektrode anliegende Spannung gemessen werden kann. Ein Abfall dieser Spannung weist darauf hin, daß die Leitfähigkeit zwischen den beiden Elektroden zunimmt. Dies wiederum deutet darauf hin, daß die zwischen beiden Elektroden angeordnete Behälterschicht defekt wird.

Bei dieser Meßmethode hat man festgestellt, daß in der Regel keine reproduzierbaren Messungen möglich sind. In der Regel werden bei nacheinander durchgeführten Messungen, beispielsweise auch an unterschiedlichen Orten der Elektrolyseeinrichtung, unterschiedliche Spannungen gemessen. Dies kann unter anderem darauf zurückzuführen sein, daß das thermische Gleichgewicht in unmittelbarer Umgebung des Metallstabes bei dessen Eintauchen empfindlich gestört wird; durch die gute Wärmeleitfähigkeit des Metallstabes und dessen relativ hohe Wärmekapazität erstarrt Kryolith an dem Stab. Dies führt zur Ausführung einer Isolationsschicht auf dem Stab und damit zu einem schlechten Kontakt zu dem geschmolzenen Aluminium.

Aufgabe der vorliegenden Erfindung ist es, ausgehend von dem bekannten Stand der Technik, eine Möglichkeit zu schaffen, reproduzierbare Meßergebnisse zu erhalten.

Diese Aufgabe wird erfindungsgemäß für einen Eintauchsensor dadurch gelöst, daß die Badelektrode an einem ein Eintauchende aufweisenden Träger angeordnet ist. Ein ähnliches, für Stahlschmelzen vorgesehenes Eintauchsensor wird z.B. in DE 2501570 offenbart. Dieser Träger dient der Stabilisierung der Badelektrode, die ihrerseits eine sehr geringe Masse aufweisen kann, da die mechanische Stabilität durch den Träger gewährleistet wird, um beispielsweise das Durchstoßen der Kryolithschicht zu ermöglichen Die Badelektrode selbst kann also eine sehr geringe Wärmekapazität aufweisen, so daß die Meßumgebung nicht nennenswert beeinflußt wird. Insbesondere ist es vorteilhaft, daß der Träger als Trägerrohr ausgebildet ist und vorzugsweise ein organisches Material enthält. Insbesondere kann er aus Pappe ausgebildet sein. Das organische Material verbrennt beim Eintauchen zumindest an seiner Oberfläche sehr schnell und bewirkt durch die Verbrennungsgase in der unmittelbaren Umgebung einen Reinigungseffekt. Eventuell anhaftendes Salz oder Kryolith wird von dem Träger beziehungsweise der Badelektrode praktisch abgesprengt, also entfernt. An einem derartigen Träger kann eine Badelektrode, vorzugsweise ausgebildet als Draht mit einem Durchmesser von etwa 0,05 mm bis 5 mm, insbesondere etwa 0,1 mm bis 2 mm, ohne nennenswerte Wärmekapazität angeordnet werden, das entsprechende Trägerrohr aus Pappe beeinflußt die Wärmekapazität der Aluminiumschmelze ebenfalls nicht wesentlich. Es hat sich gezeigt, daß eventuelle geringe Mengen erstarrten Kryoliths in wenigen Sekunden wieder geschmolzen werden, so daß reproduzierbare Meßwerte erhalten werden. Insbesondere kann man mit derartigen Sensoren gleiche Meßergebnisse an unterschiedlichen Stellen der Elektrolysezellen erhalten.

Gemäß der Erfindung ist die Badelektrode zum Teil im Inneren des Trägerrohres verlaufend ausgebildet und aus dem Eintauchende des Trägerrohres herausgeführt, wobei der herausgeführte Teil der Badelektrode vorteilhafterweise mindestens teilweise an der Außenwand des Trägerrohrs angeordnet ist. Dabei hat es sich als vorteilhaft erwiesen, daß der außerhalb des Trägers angeordnete Teil der Badelektrode mindestens teilweise von einer brennbaren Schutzhülle umgeben ist, um eine Beschädigung beim Durchstoßen der Kryolithschicht zu vermeiden. Zweckmäßig kann der Träger (1) am Eintauchende mindestens an seiner Außenseite ein feuerfestes Material aufweisen.

In vorteilhafter Weise ist die Badelektrode aus einem Metall, insbesondere aus Molybdän oder einer Wolfram-Rhenium-Legierung gebildet.

In einer vorteilhaften Ausgestaltung der Erfindung ist am Eintauchende des Trägers eine elektrochemische Meßzelle und/oder ein Thermoelement mit zwei Thermoelementschenkeln angeordnet. Um eine einfache Ausführungsform der Erfindung zu erhalten, ist es zweckmäßig, die Badelektrode mit dem Thermoelement elektrisch leitend zu verbinden. Insbesondere kann das Thermoelement im Eintauchende des Trägerrohres gehaltert sein und mit zwei Kontakten eines Verbindungsstückes zum Zwecke des Anschlusses an Signalleitungen verbunden sein. Dabei kann die Badelektrode in einer besonders einfachen Ausführungsform mit einem Kontakt des Verbindungsstückes verbunden sein, das heißt beispielsweise, daß ein Ende der Badelektrode mit dem Kontakt des Verbindungsstückes verschweißt ist.

Die Aufgabe wird für eine Meßanordnung zur Überwachung von Aluminium-Elektrolysezellen mit einem Behälter, mit einem erfindungsgemäßen Eintauchsensor gelöst, wobei die Badelektrode über eine Signalleitung und einen Spannungsmesser mit einer an der Außenseite der Wand des Behälters oder in der Wand angeordneten Gegenelektrode verbunden ist. Unter Verwendung dieser Meßanordnung ist das erfindungsgemäße Meßverfahren dadurch gekennzeichnet, daß der Eintauchsensor zuerst in die Kryolithschicht eingetaucht wird, das dort die Temperaturmessung des Kryolith erfolgt und daß anschließend der Eintauchsensor mit der Badelektrode in das flüssige Aluminium getaucht und die Spannung zwischen der Badelektrode und der Gegenelektrode gemessen wird. Insbesondere kann es vorteilhaft sein, daß die Spannung zwischen Badelektrode und Gegenelektrode im thermischen Gleichgewichtszustand gemessen wird.

Nachfolgend wird ein Ausführungsbeispiel der Erfindung an Hand einer Zeichnung erläutert. In der Zeichnung zeigt:
- Figur 1: eine Ausführungsform des erfindungsgemäßen Eintauchsensors,
- Figur 2: eine weitere Ausführungsform des Eintauchsensors und
- Figur 3: die schematische Darstellung einer erfindungsgemäßen Meßanordnung.

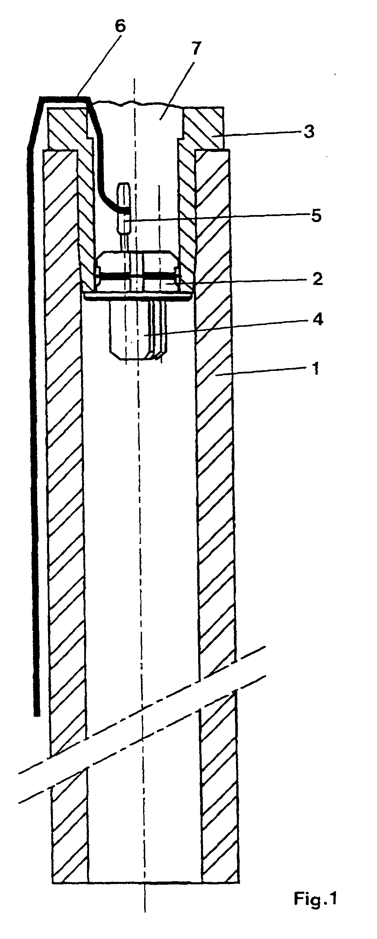

Der in Figur 1 dargestellte Eintauchsensor weist ein Trägerrohr 1 aus Pappe auf. An dessen Eintauchende ist ein Verbindungsstück 2 angeordnet und mittels eines feuerfesten Materials 3 fixiert. Das Verbindungsstück 2 weist an seinem dem Eintauchende abgewandten Ende Anschlüsse zur Kontaktierung einer Signalleitung und an seinem Eintauchende einen Kontakt 5 zum Anschluß der Badelektrode 6 auf. Das Eintauchende des Trägerrohrs 1 ist mit einem den Kontakt 5 umgebenden Zement 7 verschlossen.

Die Badelektrode 6 ist aus dem Trägerrohr 1 herausgeführt und liegt mit ihrem äußeren Ende an der Außenseite des Trägerrohres 1 an. Vor dem Gebrauch ist der äußere Teil der Badelektrode 6 mindestens teilweise durch eine in der Zeichnung nicht dargestellte Abdeckung geschützt. Die Abdeckung kann beispielsweise aus einer Papierwicklung gebildet sein. Diese Abdeckung verbrennt während des Durchtauchens des Eintauchsensors durch die Kryolithschicht und verhindert ein Erstarren von Kryolith an der Badelektrode 6.

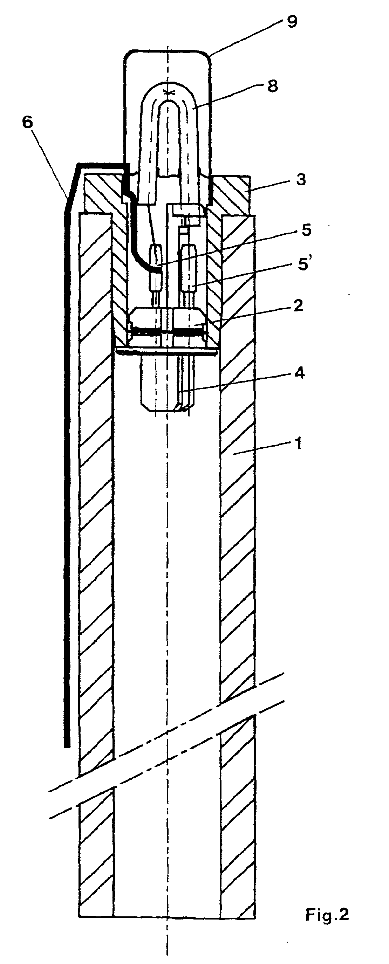

Figur 2 zeigt eine weitere Ausführungsform des erfindungsgemäßen Eintauchsensors. In dieser Ausführungsform ist an seinem Eintauchende zusätzlich ein Thermoelement 8 angeordnet. Dieses Thermoelement 8 ist von einer Schutzkappe 9 gegen den Einfluß des Kryolith geschützt. Diese Schutzkappe 9 ist aus einem Material, das sich in der Kryolithschicht auflöst, beispielsweise aus Aluminium. Das Thermoelement 8 ist an den Kontakten 5, 5' mit dem Verbindungsstück 2 verbunden, von dort aus führen über die Anschlüsse 4 in der Zeichnung nicht dargestellte Signalleitungen zu Meßeinrichtungen. Die Badelektrode 6 ist mit dem Kontakt 5 des Thermoelementes 8 verbunden und wird über die gleiche Signalleitung durch das Trägerrohr 1 hindurch mit einer Signaleinrichtung verbunden.

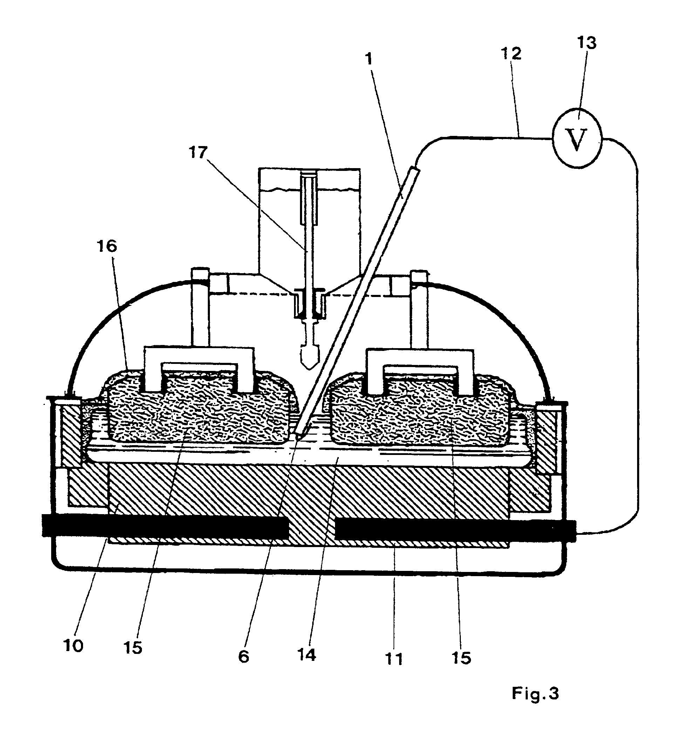

Figur 3 zeigt eine Meßanordnung unter Verwendung des in den Figuren 1 oder 2 dargestellten Eintauchsensors. Der Elektrolysebehälter weist eine Wand 10 aus Kohlenstoff auf. In dieser Wand 10 ist die Gegenelektrode 11 angeordnet, die über Signalleitungen 12 und einen Spannungsmesser 13 mit der Badelektrode 6 verbunden ist Die Gegenelektrode 11 bildet gleichzeitig eine der Kathoden für den Elektrolyseprozeß. Das Elektrolysebad 14 besteht in seinem unteren Teil aus flüssigem Aluminium und in seinem oberen Teil aus Kryolith. In das Elektrolysebad 14 ragen von oben die Kohlenstoffanoden 15 hinein. Diese sind teilweise von einer Aluminiumoxidkruste 16 überzogen. Zum Durchstoßen der Kruste ist ein sogenannter Krustenbrecher 17 vorgesehen, der einen Durchgriff von oben zu der Aluminiumschmelze ermöglicht.

Der Eintauchsensor kann nun zunächst in das Elektrolysebad 14 hineingetaucht werden, um die Temperatur zu messen. Anschließend wird er bis zum Boden des Elektrolysebades 14 eingetaucht, um die zwischen der Badelektrode 6 und der Gegenelektrode 11 anliegende Spannung zu messen. Bei einer Beschädigung der Wand 10 des Behälters durch Zerstörung des die Wand 10 bildenden Graphitblockes sinkt der elektrische Widerstand der Wand 10, ein Spannungabfall wird an dem Spannungsmesser 13 registriert. Dadurch besteht eine Frühwarnung bei Beschädigung der Wand 10. Durch die geringe Wärmekapazität der aus einem Draht gebildete Badelektrode 6 erfolgt keine wesentliche Beeinflussung des Elektrolysebades 14. Ein Anfrieren von Badbestandteilen an dem Eintauchsensor findet nicht statt, so daß reproduzierbare Messungen auch an unterschiedlichen Stellen des Elektrolysebades möglich sind.

## Patentansprüche

1. Eintauchsensor zur Überwachung von Aluminium-Elektrolysezellen mit einer Badelektrode, wobei die Badelektrode (6) an einem ein Eintauchende aufweisenden Träger (1) angeordnet ist, wobei der Träger (1) als Trägerrohr ausgebildet ist und wobei die Badelektrode (6) zum Teil im Inneren des Trägerrohrs (1) verlaufend ausgebildet und aus dem Eintauchende herausgeführt ist, **dadurch gekennzeichnet, dass** der aus dem Eintauchende des Trägerrohrs (1) herausgeführte Teil der Badelektrode mindestens teilweise an der Außenwand des Trägerrohrs (1) angeordnet ist.

2. Eintauchsensor nach Anspruch 1, **dadurch gekennzeichnet, dass** der Träger (1) ein organisches Material, insbesondere Pappe, enthält.

3. Eintauchsensor nach der Anspruch 1 oder 2, **dadurch gekennzeichnet, dass** die Badelektrode (6) aus Draht ausgebildet ist mit einem Durchmesser von etwa 0,05 mm bis 5 mm, insbesondere etwa 0,1 mm bis 2 mm.

4. Eintauchsensor nach einem der Ansprüche 1 bis 3, **dadurch gekennzeichnet, dass** der außerhalb des Trägers (1) angeordnete Teil der Badelektrode (6) mindestens teilweise von einer brennbaren Schutzhülle umgeben ist.

5. Eintauchsensor nach einem der Ansprüche 1 bis 4, **dadurch gekennzeichnet, dass** der Träger (1) am Eintauchende mindestens an seiner Außenseite ein feuerfestes Material aufweist.

6. Eintauchsensor nach einem der Ansprüche 1 bis 5, **dadurch gekennzeichnet, dass** die Badelektrode (6) aus einem Metall, insbesondere aus Molybdän oder einer Wotfram-Rhenium-Legierung gebildet ist.

7. Eintauchsensor nach einem der Ansprüche 1 bis 6, **dadurch gekennzeichnet, dass** am Eintauchende des Trägers (1) eine elektrochemische Messzelle und/oder ein Thermoelement (8) mit zwei Thermoelementschenkeln angeordnet ist.

8. Eintauchsensor nach Anspruch 7, **dadurch gekennzeichnet, dass** die Badelektrode (6) mit dem Thermoelement (8) elektrisch leitend verbunden ist.

9. Eintauchsensor nach den Ansprüchen 1 und 7, **dadurch gekennzeichnet, dass** das Thermoelement (8) und/oder die elektrochemische Messzelle im Eintauchende des Trägerrohrs (1) gehaltert ist und mit zwei Kontakten (5;5') eines Verbindungsstückes (2) zum Anschluss an Signalleitungen verbunden ist.

10. Eintauchsensor nach den Ansprüchen 8 und 9, **dadurch gekennzeichnet, dass** die Badelektrode (6) mit einem Kontakt (5) des Verbindungsstückes (2) verbunden ist.

11. Messanordnung zur Überwachung von Aluminium-Elektrolysezellen mit einem Behälter, mit einem Eintauchsensor nach mindestens einem der Ansprüche 1 bis 8, wobei die Badelektrode (6) über eine Signalleitung (12) und einen Spannungsmesser (13) mit einer an der Außenseite der Wand (10) des Behälters oder in der Wand (10) angeordneten Gegenelektrode (11) verbunden ist.

12. Messverfahren unter Verwendung einer Messanordnung nach Anspruch 11, **dadurch gekennzeichnet, dass** der Eintauchsensor zuerst in die Kryolithschmelze getaucht wird, dass dort die Temperaturmessung der Kryolithschmelze erfolgt und dass anschließend der Eintauchsensor mit der Badelektrode (6) in das flüssige Aluminium getaucht und die Spannung zwischen der Badelektrode (6) und der Gegenelektrode (11) gemessen wird.

## Claims

1. immersion sensor for monitoring aluminium electrolyte cells comprising a bath electrode, wherein the bath electrode (6) is arranged on a carrier (1) having an immersion end, the carrier (1) being configured as a carrier tube and the bath electrode (6) running partly in the interior of the carrier tube (1) and being guided out of the immersion end, **characterised in that** the part of the bath electrode guided out of the immersion end of the carrier tube (1) is at least partly arranged on the outer wall of the carrier tube (1).

2. Immersion sensor according to claim 1, **characterised in that** the carrier (1) contains an organic material, in particular cardboard.

3. Immersion sensor according to claim 1 or 2, **characterised in that** the bath electrode (6) is configured from wire, with a diameter of about 0.05 mm to 5 mm, in particular about 0.1 mm to 2 mm.

4. Immersion sensor according to any one of claims 1 to 3, **characterised in that** the part of the bath electrode (6) arranged outside the carrier (1) is at least partly surrounded by a combustible protective sleeve.

5. Immersion sensor according to any one of claims 1 to 4, **characterised in that** the carrier (1) has a fire-resistant material at the insertion end, at least on its outside.

6. Immersion sensor according to any one of claims 1 to 5, **characterised in that** the bath electrode (6) is formed from a metal, in particular from molybdenum or a tungsten-rhenium alloy.

7. Immersion sensor according to any one of claims 1 to 6, **characterised in that** an electrochemical measurement cell and/or a thermo-element (8) with two thermo-element legs is arranged on the immersion end of the carrier (1).

8. Immersion sensor according to claim 7, **characterised in that** the bath electrode (6) is electrically conductively connected to the thermo-element (8).

9. Immersion sensor according to claims 1 and 7, **characterised in that** the thermo-element (8) and/or the electrochemical measurement cell is held in the immersion end of the carrier tube (1) and is connected to two contacts (5; 5') of a connection piece (2) for connection to signal lines.

10. Immersion sensor according to claims 8 and 9, **characterised in that** the bath electrode (6) is connected to a contact (5) of the connection piece (2).

11. Measuring arrangement for monitoring aluminium electrolyte cells comprising a container, with an immersion sensor according to at least any one of claims 1 to 8, wherein the bath electrode (6) is connected by means of a signal line (12) and a voltmeter (13) to a counter-electrode (11) arranged on the outside of the wall (10) of the container or in the wall (10).

12. Measuring method using a measuring arrangement according to claim 11, **characterised in that** the immersion sensor is firstly immersed in the cryolite melt, **in that** the temperature of the cryolite melt is measured there and **in that** the immersion sensor with the bath electrode (6) is then immersed in the liquid aluminium and the voltage between the bath electrode (6) and the counter-electrode (11) is measured.

## Revendications

1. Capteur d'immersion pour surveiller des cellules d'électrolyse d'aluminium comportant une électrode immergée, dans lequel l'électrode immergée (6) est disposée sur un support (1) présentant une extrémité d'immersion, dans lequel le support (1) est réalisé sous la forme d'un tube support et dans lequel l'électrode immergée (6) est réalisée s'étendant en partie dans l'intérieur du tube support (1) et ressort par l'extrémité d'immersion, **caractérisé en ce que** la partie de l'électrode immergée ressortant par l'extrémité d'immersion du tube support (1) est disposée au moins partiellement sur la paroi extérieure du tube support (1).

2. Capteur d'immersion selon la revendication 1, **caractérisé en ce que** le support (1) comprend un matériau organique, en particulier du carton.

3. Capteur d'immersion selon la revendication 1 ou 2, **caractérisé en ce que** l'électrode immergée (6) est formée par un fil avec un diamètre d'environ 0,05 mm jusqu'à 5 mm, en particulier environ 0,1 mm à 2 mm.

4. Capteur d'immersion selon une revendication 1 à 3, **caractérisé en ce que** la partie de l'électrode immergée (6) disposée à l'extérieur du support (1) est entourée au moins partiellement par une gaine de protection inflammable.

5. Capteur d'immersion selon l'une des revendications 1 à 4, **caractérisé en ce que** le support (1) présente à l'extrémité d'immersion au moins un matériau réfractaire sur son côté extérieur.

6. Capteur d'immersion selon l'une des revendications 1 à 5, **caractérisé en ce que** l'électrode immergée (6) est réalisée en un métal, en particulier en molybdène ou en un alliage de tungstène-rhénium.

7. Capteur d'immersion selon l'une des revendications 1 à 6, **caractérisé en ce qu'**une cellule de mesure électrochimique et/ou un thermoélément (8) comportant deux branches de thermoélément est disposée à l'extrémité d'immersion du support (1).

8. Capteur d'immersion selon la revendication 7, **caractérisé en ce que** l'électrode immergée (6) est reliée de façon électriquement conductrice au thermoélément (8).

9. Capteur d'immersion selon les revendications 1 et 7, **caractérisé en ce que** le thermoélément (8) et/ou la cellule de mesure électrochimique est supporté dans l'extrémité d'immersion du tube support (1) et est relié à deux contacts (5 ; 5') d'une partie de liaison (2) pour une connexion à des lignes signal.

10. Capteur d'immersion selon les revendications 8 et 9, **caractérisé en ce que** l'électrode immergée (6) est reliée à un contact (5) de la partie de liaison (2).

11. Dispositif de mesure pour surveiller des cellules d'électrolyse d'aluminium comportant un réservoir, avec un capteur d'immersion selon au moins une des revendications 1 à 8, dans lequel l'électrode immergée (6) est reliée à une contre-électrode (11) disposée sur le côté extérieur de la paroi (10) du récipient ou dans la paroi (10) par l'intermédiaire d'une ligne signal (12) et d'un dispositif de mesure de tension (13).

12. Procédé de mesure utilisant un dispositif de mesure selon la revendication 11, **caractérisé en ce que** le capteur d'immersion est plongé tout d'abord dans un bain en fusion de cryolithe, **en ce que** la mesure de température du bain de cryolithe est effectuée et **en ce qu'**ensuite, le capteur d'immersion avec l'électrode immergée (6) est plongé dans l'aluminium liquide et la tension entre l'électrode immergée (6) et la contre-électrode (11) est mesurée.
